# EUROPEAN PATENT SPECIFICATION

(11) **EP 4 134 233 B1**
(45) Date of publication and mention of the grant of the patent: **08.01.2025**
(21) Application number: 21784251.7
(22) Date of filing: 06.04.2021
(51) Int. Cl.: B32B 27/28, B32B 27/32, C08K 5/098, C08L 23/04, C08L 23/26, C08L 29/04

(54) **RESIN COMPOSITION, AND FILM AND MULTILAYER STRUCTURE BODY USING SAME**
HARZZUSAMMENSETZUNG SOWIE FILM UND MEHRSCHICHTIGER STRUKTURKÖRPER DAMIT
COMPOSITION DE RÉSINE, FILM ET CORPS DE STRUCTURE MULTICOUCHE L'UTILISANT

(30) Priority: 10.04.2020 JP 2020070751
(43) Date of publication of application: 15.02.2023
(73) Proprietor: Mitsubishi Chemical Corporation, Chiyoda-ku Tokyo 100-8251 (JP)
(72) Inventor: SAWANO Eri, Tokyo 100-8251 (JP); NAKANISHI Shinji, Tokyo 100-8251 (JP)
(74) Representative: Hoffmann Eitle
(86) International application number: PCT/JP2021/014562
(87) International publication number: WO 2021/206072

(56) References cited:
- WO-A1-2015/141610
- JP-A- 2012 251 006
- JP-A- 2013 151 623
- JP-A- 2014 043 019
- JP-A- 2016 029 159
- JP-A- 2018 020 496
- JP-A- 2021 045 963
- JP-A- H09 278 952
- No further relevant documents disclosed

## Description

### Technical Field

The present disclosure relates to a resin composition, and more particularly to a resin composition that contains a bio-polyethylene resin but suppresses gel formation and can be formed into a molded product having excellent transparency, and a film and a multilayer structure using the same.

### Background Art

In recent years, the environmental burden caused by plastic waste has become a major problem, and, to reduce such burden, various technologies have been proposed to replace petroleum-derived plastics with biomass plastics derived from biomass resources such as plants.

For example, ethylene-vinyl alcohol copolymers (hereinafter also abbreviated as "EVOHs") are widely used in food packaging materials because of their excellent gas barrier properties and transparency, but most of them are used in multilayer structures in which a polyolefin resin or the like is laminated thereon via an adhesive agent layer so as to impart water resistance, strength, and other functions.

In such circumstances, a configuration has been proposed in which a portion or the entirety of the polyolefin resin layer in such a multilayer structure is made of, for example, a polyethylene resin (bio-polyethylene resin) derived from a biomass resource.

Furthermore, a configuration has also been proposed in which at least a portion of such a multilayer structure is constituted by a recovered material layer to promote the recycling of resources (see PTL 1, which will be described later).

The recovered material layer above refers to a layer that is formed using pellets or the like obtained by recovering and melt molding scraps, the scraps being unwanted portions, such as trimmings, edges, and the like, of molded products, and defective products, which are left after the molded products, such as containers, have been produced using the multilayer structure, or waste and the like that are discarded after use of the molded products for various purposes.

### Citation List

### Patent Literature

PTL 1: JP-A-2014-30942

### Summary

### Technical Problem

The aforementioned bio-polyethylene resin, however, contains a large amount of low molecular weight components, compared with a petroleum-derived polyethylene resin, and therefore may cause thermal degradation during molding, resulting in gel formation and a reduction in the original transparency of the resin. For this reason, a molded product in which the aforementioned recovered material layer is used, or a molded product in which no recovered material layer is used but which is molded using a bio-polyethylene resin and an EVOH so as to have both gas barrier properties and mechanical strength, may have the problem of degradation in appearance, and there has been a strong demand for an improvement with respect to this problem.

Therefore, an object of the present disclosure is to provide an excellent resin composition that contains a bio-polyethylene resin but can suppress gel formation and a reduction in transparency during molding.

### Solution to Problem

To achieve the above-described object, the inventors of the present disclosure conducted in-depth research and found that the above-described object can be achieved when a resin composition, in which a bio-polyethylene resin and an EVOH are combined, further contains an alkali metal salt in a specific ratio with respect to the EVOH, and thus accomplishes the present disclosure.

That is to say, the present disclosure provides [1] to [9] below.
[1] A resin composition containing a bio-polyethylene resin (A), an EVOH (B), and an alkali metal salt (C), wherein the content of the alkali metal salt (C) is 10 ppm to 1500 ppm, in terms of metal, with respect to the weight of the EVOH (B).
[2] The resin composition according to [1], wherein a content ratio (A/B) by weight of the bio-polyethylene resin (A) to the ethylene-vinyl alcohol copolymer (B) is 100/0.01 to 100/25.
[3] The resin composition according to [1] or [2], wherein the ethylene content in the ethylene-vinyl alcohol copolymer (B) is 20 mol% to 60 mol%.
[4] The resin composition according to any one of [1] to [3], further containing an adhesive resin (D).
[5] The resin composition according to any one of [1] to [4], wherein the adhesive resin (D) is a maleic acid-modified polymer.
[6] The resin composition according to any one of [1] to [5], wherein the alkali metal salt (C) is an acetic acid salt of an alkali metal.
[7] The resin composition according to any one of [1] to [5], wherein the alkali metal salt (C) is sodium acetate.
[8] A film made of the resin composition according to any one of [1] to [7].
[9] A multilayer structure including a gas barrier layer, a base material resin layer, and an intermediate layer provided between the gas barrier layer and the base material resin layer, wherein the intermediate layer is a layer containing the resin composition according to any one of [1] to [7].

### Advantageous Effects

A resin composition of the present disclosure is a resin composition in which a bio-polyethylene resin (A) and an EVOH (B) are combined, wherein the resin composition further contains an alkali metal salt (C) in a specific ratio with respect to the EVOH (B). With this configuration, when the resin composition is heated and melted and then molded, gel formation and a reduction in transparency are suppressed, and thus an effect of obtaining a molded product having an excellent appearance can be achieved. Even though the bio-polyethylene resin is used, the appearance of the molded product compares favorably with that of a molded product in which a conventional petroleum-derived polyethylene resin is used, and therefore use of bio-polyethylene resins in resin molded products can be promoted, which can contribute to a reduction in environmental burden.

Furthermore, a film and a multilayer structure of the present disclosure are each formed using the resin composition of the present disclosure, and therefore, as described above, even though the bio-polyethylene resin is used, the film and the multilayer structure have excellent appearances and can contribute to a reduction in environmental burden.

In the present disclosure, the term "film" is intended to encompass so-called "sheet" and "tape".

Here, the above-described effect of the present disclosure is considered to be achieved because, when the resin composition of the present disclosure is heated and melted in contact with high-temperature metals constituting a barrel, a screw, and the like, the alkali metal salt (C) controls the pH of the resin composition, which is in contact with the high-temperature metals, within an appropriate range, thereby suppressing thermal degradation of the low molecular weight components of the bio-polyethylene resin, unexpected side reactions of the EVOH, and the like, and consequently suppressing an increase in viscosity, which causes gel formation and a reduction in transparency.

### Description of Embodiment

Hereinafter, embodiments of the present disclosure will be described in detail. However, the present disclosure is not limited to these embodiments.

A resin composition of the present disclosure contains a bio-polyethylene resin (A), an EVOH (B), and an alkali metal salt (C). The individual components will be described below.

### Bio-Polyethylene Resin (A)

The "bio-polyethylene resin" above means a polyethylene resin that is chemically or biologically synthesized from a renewable biomass resource serving as a starting material. The bio-polyethylene resin is characterized in that, due to the carbon neutral nature of the biomass, the bio-polyethylene resin does not increase the concentration of carbon dioxide in the atmosphere even when it is disposed of by incineration.

Preferably, plant-derived ethylene that is derived from bioethanol obtained from a plant material is used for the bio-polyethylene resin (A). That is to say, the bio-polyethylene resin (A) is preferably a plant-derived polyethylene resin.

There is no difference in the molecular weight and physical properties, such as mechanical properties and thermal properties, between polyethylene resins derived from plants (biomass resources) and polyethylene resins derived from petroleum. Therefore, to distinguish between them, the biomass rate is commonly used. The "biomass rate" is an indicator of the content ratio of a plant-derived bio-polyethylene resin and is obtained by measuring the concentration of ¹⁴C (radioactive carbon-14 with a half-life of 5,730 years) by accelerator mass spectrometry, since carbon constituting a petroleum-derived polyethylene resin does not contain ¹⁴C. Accordingly, any film in which a plant-derived polyethylene resin is used has a biomass rate corresponding to the content ratio of the plant-derived polyethylene resin when the biomass rate of the film is measured.

The biomass rate can be measured using the following method, for example.

### Measurement of Biomass Rate

A sample to be measured is burned to generate carbon dioxide, which is then purified in a vacuum line and reduced with hydrogen using iron as a catalyst to generate graphite. The graphite is then loaded in a dedicated ¹⁴C-AMS machine (manufactured by NEC) based on a tandem accelerator, and the ¹⁴C count, the concentration of ¹³C (¹³C/¹²C), and the concentration of ¹⁴C (¹⁴C/¹²C) are measured. Then, the ratio of the ¹⁴C concentration of the sample carbon to standard modern carbon is calculated from these measured values.

As the bio-polyethylene resin (A), not only a polyethylene homopolymer obtained through polymerization of such ethylene derived from bioethanol but also a polyethylene copolymer obtained through copolymerization of such ethylene and a small amount of comonomer may be used. For example, the polyethylene copolymer may be composed of ethylene and another α-olefin monomer with a weight fraction of less than 50% or a non-olefin monomer having a functional group with a weight fraction of 3% or less.

Examples of the other α-olefin monomer include α-olefins with 3 to 20 carbon atoms, such as propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. One of these α-olefin monomers may be used alone, or two or more thereof may be used in combination.

Examples of the non-olefin monomer include a styrene monomer, a diene monomer, a cyclic monomer, an oxygen atom-containing monomer, and the like. One of these non-olefin monomers may be used alone, or two or more thereof may be used in combination.

Examples of the styrene monomer include styrene, 4-methylstyrene, 4-dimethylaminostyrene, and the like.

Examples of the diene monomer include 1,3-butadiene, 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, and the like.

Examples of the cyclic monomer include methylenenorbornene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, 2-propenyl-2,2-norbornadiene, cyclopentene, and the like.

Examples of the oxygen atom-containing monomer include hexenol, hexenoic acid, methyl octenoate, and the like.

These other α-olefin monomers and non-olefin monomers may be made from renewable biomass resources or petroleum. In the cases where α-olefin or non-olefin monomers made from renewable biomass resources are used, the biomass rate of final products can be increased even more . In the cases where α-olefin or non-olefin monomers made from petroleum are used, since a wide variety of monomers are available, physical properties and the like of bio-polyethylene resins to be ultimately obtained can be easily adjusted for the purposes by using such monomers in combination.

The bio-polyethylene resin (A) used in the present disclosure is obtained through homopolymerization of ethylene, or copolymerization of ethylene and a comonomer such as those described above, and the polymerization or copolymerization can be performed according to an ordinary method using a metallocene catalyst or a Ziegler-Natta catalyst. Of these catalysts, a metallocene catalyst is preferably used.

Specific examples of the bio-polyethylene resin (A) include high-density polyethylene (HDPE, density: 0.940 g/cm³ or more), medium-density polyethylene (MDPE, density: 0.925 g/cm³ or more and less than 0.940 g/cm³), low-density polyethylene (LDPE, density: less than 0.925 g/cm³), linear low-density polyethylene (LLDPE, density: 0.910 to 0.925 g/cm³), and the like. One of these may be used alone, or two or more thereof may be used in combination. In particular, high-density polyethylene and linear low-density polyethylene are preferable.

The melt flow rate (MFR) (at 190°C and a load of 2160 g) of the bio-polyethylene resin (A) is typically 0.1 to 50 g/10 min, preferably 0.5 to 30 g/10 min, and more preferably 2 to 10 g/10 min. If the MFR is too high, the film forming properties tend to be unstable, and if the MFR is too low, the viscosity tends to be too high and melt extrusion tends to be difficult.

Examples of a commercially available product that can be suitably used as the bio-polyethylene resin (A) of the present disclosure include Green PE manufactured by Braskem.

### EVOH (B)

The EVOH (B) used with the above-described bio-polyethylene resin (A) is typically a resin obtained through saponification of an ethylene-vinyl ester copolymer, which is a copolymer of ethylene and a vinyl ester monomer, and is a water-insoluble thermoplastic resin. As the vinyl ester monomer, vinyl acetate is typically used from an economic standpoint.

Polymerization of ethylene and the vinyl ester monomer can be performed using any known polymerization method, such as solution polymerization, suspension polymerization, or emulsion polymerization, and solution polymerization using methanol as a solvent is typically used. Saponification of the obtained ethylene-vinyl ester copolymer can also be performed using a known method.

The EVOH (B) produced in this manner mainly contains ethylene-derived structural units and vinyl alcohol structural units, and usually contains a small amount of vinyl ester structural units that remain unsaponified.

As the vinyl ester monomer, vinyl acetate is typically used because of its good market availability and efficiency in treating impurities during production. Examples of other vinyl ester monomers include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate, and it is possible to use aliphatic vinyl esters typically with 3 to 20 carbon atoms, preferably with 4 to 10 carbon atoms, and more preferably with 4 to 7 carbon atoms. One of these vinyl ester monomers may be used alone, or two or more thereof may be used in combination.

The ethylene content in the EVOH (B) can be controlled using the pressure of ethylene in the copolymerization of ethylene and the vinyl ester monomer, and is preferably 20 mol% to 60 mol%, more preferably 25 mol% to 50 mol%, and even more preferably 25 mol% to 35 mol%. If the ethylene content is too low, the gas barrier properties and melt moldability under high humidity tend to be impaired, and conversely, if the ethylene content is too high, the gas barrier properties tend to be impaired.

The ethylene content can be measured as defined in ISO 14663.

Furthermore, the degree of saponification of the vinyl ester component in the EVOH (B) can be controlled using the amount of a saponification catalyst (typically, an alkaline catalyst such as sodium hydroxide is used), temperature, time, and the like when saponifying the ethylene-vinyl ester copolymer, and is typically 90 mol% to 100 mol%, preferably 95 mol% to 100 mol%, and more preferably 99 mol% to 100 mol%. If the degree of saponification is low, the gas barrier properties, thermal stability, moisture resistance, and the like tend to be impaired.

The degree of saponification of the EVOH (B) can be measured as defined in JIS K6726 (note: EVOH is used as a solution in which it is dissolved uniformly in water/methanol solvent).

Furthermore, the MFR (at 210°C and a load of 2160 g) of the EVOH (B) is typically 0.5 to 100 g/10 min, preferably 1 to 50 g/10 min, and more preferably 3 to 35 g/10 min. If the MFR is too high, the moldability tends to be unstable, and if the MFR is too low, the viscosity tends to be too high and melt extrusion tends to be difficult.

The MFR is an indicator of the degree of polymerization of the EVOH, and can be adjusted using the amount of polymerization initiator and the amount of solvent when copolymerizing ethylene and the vinyl ester monomer.

Furthermore, the EVOH (B) may further contain structural units derived from a comonomer described below, as long as the effects of the present disclosure are not inhibited (e.g., in an amount of 10 mol% or less of the EVOH (B)).

Examples of this comonomer include the following comonomers: olefins such as propylene, 1-butene, and isobutene, hydroxy group-containing α-olefins such as 3-buten-1-ol, 3-butene-1,2-diol, 4-penten-1-ol, and 5-hexene-1,2-diol, and their derivatives such as esterified products and acylated products; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (phthalic anhydride), maleic acid (maleic anhydride), and itaconic acid (itaconic anhydride), and their salts and mono- and di-alkylesters having an alkyl group with 1 to 18 carbon atoms; acrylamides such as acrylamide, N-alkylacrylamide having an alkyl group with 1 to 18 carbon atoms, N,N-dimethylacrylamide, 2-acrylamidepropanesulfonic acid and its salt, and acrylamidepropyldimethylamine and its acid salt and quaternary salt; methacrylamides such as methacrylamide, N-alkylmethacrylamide having an alkyl group with 1 to 18 carbon atoms, N,N-dimethylmethacrylamide, 2-methacrylamidepropanesulfonic acid and its salt, and methacrylamidepropyldimethylamine and its acid salt and quaternary salt; N-vinylamides such as N-vinylpyrrolidone, N-vinylformamide, and N-vinylacetamide; vinyl cyanides such as acrylnitrile and methacrylnitrile; vinyl ethers such as alkyl vinyl ether having an alkyl group with 1 to 18 carbon atoms, hydroxyalkyl vinyl ether, and alkoxyalkyl vinyl ether; vinyl halide compounds such as vinyl chloride, vinylidene chloride, vinyl fluoride, vinylidene fluoride, and vinyl bromide; vinylsilanes such as trimethoxy vinylsilane; allyl halide compounds such as allyl acetate and allyl chloride; allyl alcohols such as allyl alcohol and dimethoxyallyl alcohol; and trimethyl-(3-acrylamide-3-dimethylpropyl)-ammonium chloride, acrylamide-2-methylpropanesulfonic acid, and the like. One of these comonomers may be used alone, or two or more thereof may be used in combination.

In particular, an EVOH having a primary hydroxyl group in a side chain is preferably used as the EVOH (B) that is used in the present disclosure, because in this case good secondary moldability is achieved while the gas barrier properties are maintained. Of such EVOHs, an EVOH obtained through copolymerization of hydroxy group-containing α-olefins is more preferable and an EVOH having a 1,2-diol structure in a side chain is even more preferable.

When an EVOH having a primary hydroxyl group in a side chain is used, the content of structural units derived from a monomer having the primary hydroxyl group is typically 0.1 mol% to 20 mol%, preferably 0.5 mol% to 15 mol%, and more preferably 1 mol% to 10 mol% of the EVOH.

Furthermore, the EVOH (B) used in the present disclosure may be "post-modified" by urethanation, acetalization, cyanoethylation, oxyalkylenation, or the like.

Moreover, the EVOH (B) used in the present disclosure may be a mixture of two or more EVOHs (B), such as those with different ethylene contents, different degrees of saponification, different degrees of polymerization, or different copolymerization components, for example.

Note that, in the resin composition of the present disclosure, the content ratio (A/B) by weight of the bio-polyethylene resin (A) to the EVOH (B) is preferably 100/0.01 to 100/25, more preferably 100/1 to 100/20, and even more preferably 100/5 to 100/15. If the mixing ratio of the bio-polyethylene resin (A) is too low, the moldability at low temperatures tends to be impaired, while if the bio-polyethylene resin (A) content is too high, the barrier properties tend to be impaired.

### Alkali Metal Salt (C)

Examples of the alkali metal salt (C) used with the bio-polyethylene resin (A) and the EVOH (B) in the present disclosure include organic and inorganic acid salts of alkali metals, and one of these alkali metal salts may be used alone, or two or more thereof may be used in combination.

Examples of the alkali metal constituting the alkali metal salt (C) include lithium, sodium, potassium, cesium, and the like, and examples of the organic acids that form salts with these alkali metals include carboxylic acids, such as acetic acid, propionic acid, butyric acid, lauric acid, stearic acid, oleic acid, and behenic acid. Examples of the inorganic acids include sulfuric acid, sulfurous acid, carbonic acid, phosphoric acid, and the like. Therefore, sodium acetate and potassium acetate are particularly suitably used as the alkali metal salt (C).

In the present disclosure, the content of the alkali metal salt (C) is 10 ppm to 1500 ppm, preferably 50 ppm to 1000 ppm, and more preferably 70 ppm to 500 ppm, in terms of metal, with respect to the weight of the EVOH (B). In other words, if the content of the alkali metal salt (C) is outside the above-described range, the pH balance of the resulting resin composition is impaired, and the effects of suppressing gel formation and a reduction in transparency during heating and melting tends to be insufficient.

### Other Components

In addition to the above-described essential components (A) to (C), optional components other than the components (A) to (C) may be added to the resin composition of the present disclosure as long as the effect of the present disclosure is not inhibited. For example, an adhesive resin (D) described below may be added in order to suppress die drool that may occur during molding using the resin composition.

### Adhesive Resin (D)

An example of the adhesive resin (D) is a modified polyolefin polymer having a carboxy group that is obtained by chemically bonding an unsaturated carboxylic acid or an anhydride thereof to a polyolefin resin through an addition reaction, a grafting reaction, or the like. Examples of the modified polyolefin polymer having a carboxy group include maleic anhydride-modified polymers, such as maleic anhydride grafted polyethylene, maleic anhydride grafted polypropylene, maleic anhydride grafted ethylene-propylene (block and random) copolymers, maleic anhydride grafted ethylene-ethyl acrylate copolymers, maleic anhydride grafted ethylene-vinyl acetate copolymers, maleic anhydride-modified polycyclic olefin resins, and maleic anhydride grafted polyolefin resins.

One of these may be used alone, or two or more thereof may be used in combination.

In particular, a maleic anhydride-modified polymer such as maleic anhydride-modified polyethylene or a maleic anhydride-modified ethylene-α-olefin copolymer is preferable as the adhesive resin (D) that may be used in the present disclosure, because such a maleic anhydride-modified polymer contributes to not only the effect of suppressing the occurrence of die drool during molding but also the effect of suppressing gel formation during heating and melting and the effect of suppressing a reduction in transparency.

The acid value of the maleic anhydride-modified polymer is typically 50 mg KOH/g or less, preferably 30 mg KOH/g or less, and more preferably 20 mg KOH/g or less. If the acid value is too high, the number of reaction sites with hydroxyl groups in the EVOH (B) increases, leading to the formation of a highly polymerized product in the melt kneading process, which impairs the stability during extrusion, and thus, there is a trend that a favorable molded product is unlikely to be obtained. The lower limit of the acid value is typically 1 mg KOH/g, and preferably 2 mg KOH/g. The above-described acid value is measured as defined in JIS K0070.

When maleic anhydride-modified polyethylene is used as the maleic anhydride-modified polymer, the MFR (at 190°C and a load of 2160 g) is typically 0.01 to 150 g/10 min, preferably 0.1 to 50 g/10 min, more preferably 1 to 25 g/10 min, and even more preferably 3 to 10 g/10 min.

When a maleic anhydride-modified ethylene-α-olefin copolymer is used as the maleic anhydride-modified polymer, the MFR (at 230°C and a load of 2160 g) is typically 0.1 to 150 g/10 min, preferably 0.5 to 100 g/10 min, more preferably 1 to 50 g/10 min, and even more preferably 5 to 35 g/10 min.

If the MFR is outside the above-described range, the compatibility with the bio-polyethylene resin (A) and the EVOH (B) tends to be impaired, and the dispersibility during mixing tends to be impaired.

When the resin composition of the present disclosure contains the maleic anhydride-modified polymer as the adhesive resin (D), the content of the maleic anhydride-modified polymer is preferably 0.01 to 25 parts by weight, more preferably 1 to 20 parts by weight, and even more preferably 5 to 15 parts by weight, with respect to a total of 100 parts by weight of the bio-polyethylene resin (A) and the EVOH (B). When the content of the maleic anhydride-modified polymer is within the above-described range, superior effects of suppressing gel formation and suppressing a reduction in transparency can be advantageously achieved as a result of the combined effect of the maleic anhydride-modified polymer and the essential components (A) and (B).

The resin composition of the present disclosure may further contain other thermoplastic resins and additives that are usually added to thermoplastic resins.

Examples of the additives include plasticizers (e.g., aliphatic polyhydric alcohols such as ethylene glycol, glycerin, hexanediol, etc.), oxygen absorbers, thermal stabilizers, light stabilizers, ultraviolet absorbers, colorants, antistatic agents, surfactants (excluding those used as lubricants), antibacterial agents, antiblocking agents, fillers (e.g., inorganic fillers etc.), and the like. One of these additives may be used alone, or two or more thereof may be used in combination.

### Production of Resin Composition

The resin composition of the present disclosure can be produced using the above-described essential components (A) to (C), and appropriately using the other components (D), optional additives, and the like, if necessary. For the bio-polyethylene resin (A) and the EVOH (B), which are essential components, although a material (unrecycled product) that has never been used for molding can be used, it is possible to use a recovered used multilayer structure having layers respectively containing the bio-polyethylene resin (A) and the EVOH (B), or unwanted portions, defective products, or the like that have been discarded in the process producing products using such a multilayer structure.

Note that, in general, the recovered multilayer structure has a configuration in which a reinforcement layer formed at least partially using the bio-polyethylene resin (A) and a gas barrier layer formed using the EVOH (B) are joined to each other via the adhesive resin (D), and therefore, when the resin composition of the present disclosure is produced using this recovered material, the produced resin composition inevitably contains the adhesive resin (D).

Hereinafter, a method for producing the resin composition of the present disclosure will be described by means of an example in which a recovered multilayer structure containing layers of the bio-polyethylene resin (A) and the EVOH (B) is used.

Usually, a recovered multilayer structure is used as the material of the resin composition of the present disclosure after the recovered multilayer structure has been ground, and subjected to particle size adjustment with a sieve or the like as necessary.

The grinding of the recovered material can be performed using a known grinder. The apparent density of the ground product is typically 0.25 to 0.85 g/mL, preferably 0.3 to 0.7 g/mL, and more preferably 0.35 to 0.6 g/mL. If the apparent density is too low, the dispersion of the bio-polyethylene resin (A) in the resin composition tends to be poor, and the melt moldability and mechanical properties tend to be impaired in the process of obtaining a molded product. If the apparent density is too high, the melt moldability of a regrind layer of a molded product to be obtained tends to be impaired due to the occurrence of improper feeding in the extruder. The above-described apparent density of the ground product refers to a value as measured in conformity with a testing method specified in "5.3 Apparent Density" of JIS K6891.

The apparent density can be controlled by freely adjusting the shape of a grinding blade of the grinder, the number of revolutions of the grinding blade, the processing speed of grinding, the aperture size of a mesh that is used as the sieve, and the like. The shape and particle size of the ground product can be adjusted using a known method.

To obtain the resin composition of the present disclosure using the above-described ground product obtained from the recovered multilayer structure (hereinafter referred to simply as the "ground product"), the alkali metal salt (C) is added to the ground product and mixed uniformly. Note that, in terms of productivity, an unrecycled bio-polyethylene resin (A) or an unrecycled EVOH (B) may also be added to the ground product.

Examples of the method for mixing the ground product and the alkali metal salt (C) include known methods such as dry blending, melt kneading, solution mixing, and impregnation.

An example of the dry blending is (i) a method in which the ground product and the alkali metal salt (C) are dry blended using a tumbler or the like. During the dry blending, the alkali metal salt (C) may be dry blended as it is, or the ground product and pellets of a thermoplastic resin containing the alkali metal salt (C) that have been prepared beforehand may be dry blended.

Examples of the melt kneading include (ii) a method in which a dry blended product obtained as above is melt kneaded and (iii) a method in which the alkali metal salt (C) is added to the ground product in a molten state and the mixture is melt kneaded.

Furthermore, an example of the solution mixing is (iv) a method in which the alkali metal salt (C) is added to a solution that has been prepared using the ground product, the mixture is solidified and molded, and then solid-liquid separation is performed, followed by drying.

Of these methods, melt kneading is preferable, and the method (ii) is particularly preferable, in terms of productivity. Also, a plurality of methods selected from these methods may be used in combination.

It is not necessarily required to use a ground product obtained from a recovered multilayer structure in the above-described manner as the material of the resin composition of the present disclosure, and unrecycled products, that is, newly produced bio-polyethylene resin (A) and EVOH (B) may be used. When the unrecycled products are used, the resin composition can be prepared so as to have the mixing composition of the present disclosure using a known, commonly used method, such as dry blending, melt kneading, or solution mixing, for example.

Note that the alkali metal salt (C), which is an essential component of the resin composition of the present disclosure, can be prepared during the preparation of the EVOH (B) such that the EVOH (B) contains the alkali metal salt (C) in a predetermined ratio. Naturally, the resin composition of the present disclosure may be obtained by preparing the EVOH (B) without containing the alkali metal salt (C), and adding the alkali metal salt (C) to the resin components (A) and (B) and mixing the resulting mixture in a similar manner to that described above during mixing of the resin composition.

After the components are uniformly mixed, the resin composition of the present disclosure can be prepared into various forms such as pellet form and powder form and provided as a molding material for various types of molded products. In particular, according to the present disclosure, when the resin composition is provided as a material for melt molding, even though the resin composition contains the bio-polyethylene resin (A), gel formation and a reduction in transparency are suppressed during heating and melting, and a molded product having an excellent appearance is thus obtained. Therefore, the resin composition of the present disclosure is particularly suitably provided as a material for melt molding.

Furthermore, a molded product obtained using the resin composition of the present disclosure can be put to practical use as a single-layer film that makes effective use of the properties of the resin composition of the present disclosure or a multilayer structure having a layer that is molded using the resin composition of the present disclosure, or various types of single- or multi-layer molded products to which three-dimensional shapes are imparted.

Melt molding is suitable as the molding method for obtaining the molded product.

As the melt molding, extrusion molding (T-die extrusion, inflation extrusion, blow molding, melt spinning, heterogeneous extrusion, etc.) and injection molding are mainly used. The melt molding temperature is within a range of typically 150°C to 300°C, preferably 160°C to 250°C, and more preferably 170°C to 230°C. When the melt molding temperature is within the above-described range, the resin composition of the present disclosure can be favorably molded, and a molded product having an excellent appearance can be obtained without gel formation and a reduction in transparency, which have been problems with conventional resin compositions containing a bio-polyethylene resin.

### Multilayer Structure

A multilayer structure will be described as an example of the molded product in which the resin composition of the present disclosure is used. Laminating a layer containing the resin composition of the present disclosure, which encompasses both a layer consisting of the resin composition of the present disclosure and a layer made of a mixed resin composition of the resin composition of the present disclosure and another resin composition, with a base material resin layer made of another base material (hereinafter referred to as "base material resin") composed mainly of a thermoplastic resin other than the resin composition of the present disclosure and a gas barrier layer can impart further strength or impart other functions to the resulting multilayer structure. Of such multilayer structures, a multilayer structure including a gas barrier layer, a base material resin layer, and an intermediate layer provided between the gas barrier layer and the base material resin layer, the intermediate layer being a layer containing the resin composition of the present disclosure, is particularly preferable.

Note that, if two or more intermediate layers are provided, it is preferable that at least one of these intermediate layers contains the resin composition of the present disclosure.

Examples of the base material resin include polyethylene resins such as linear low-density polyethylene, low-density polyethylene, ultra-low-density polyethylene, medium-density polyethylene, high-density polyethylene, ethylene-propylene (block and random) copolymers, and ethylene-α-olefin (α-olefin with 4 to 20 carbon atoms) copolymers; polypropylene resins such as polypropylene and propylene-α-olefin (α-olefin with 4 to 20 carbon atoms) copolymers; polyolefin resins in a broad sense, including (unmodified) polyolefin resins such as polybutene, polypentene, and polycyclic olefin resins (polymers having a cyclic olefin structure in at least one of the main chain and side chains), and modified olefin resins such as unsaturated carboxylic acid-modified polyolefin resins obtained by grafting the above-described polyolefins with unsaturated carboxylic acids or esters thereof; ionomers; ethylene-vinyl acetate copolymers; ethylene-acrylic acid copolymers; ethylene-acrylic acid ester copolymers; polyester resins; polyamide resins (including copolymerized polyamide); polyvinyl chloride; polyvinylidene chloride; acrylic resins; polystyrene resins; vinyl ester resins; polyester elastomers; polyurethane elastomers; polystyrene elastomers; halogenated polyolefins such as chlorinated polyethylene and chlorinated polypropylene; aromatic or aliphatic polyketones; and the like.

Of these, polyamide resins, polyolefin resins, polyester resins, and polystyrene resins are preferable in terms of economy and productivity, and polyethylene resins, polypropylene resins, and polyolefin resins such as polycyclic olefin resins and unsaturated carboxylic acid-modified polyolefin resins thereof are more preferable.

There is no limitation on the gas barrier layer, and a gas barrier layer made of an inorganic substance or a gas barrier layer made of an organic substance may be used. Examples of the gas barrier layer made of an inorganic substance include metal layers such as aluminum foil and an aluminum vapor-deposited layer and metal compound layers such as silicon oxide vapor-deposited layer and an aluminum oxide vapor-deposited layer. Examples of the gas barrier layer made of an organic substance include layers made of polyvinylidene chloride polymers and layers made of vinyl alcohol polymers such as polyvinyl alcohol and EVOH.

With regard to the layer configuration of the multilayer structure, when a layer containing the resin composition of the present disclosure is represented by a (a1, a2, ...) and a base material resin layer is represented by b (b1, b2, ...), any combinations, such as a/b, b/a/b, a/b/a, a1/a2/b, a/b1/b2, b2/b1/a/b1/b2, and b2/b1/a/b1/a/b1/b2, can be used. Furthermore, it is possible to add a recycled layer that is obtained by re-melting and re-molding edges, defective products, and the like generated in the process of producing the multilayer structure and that contains a mixture of the resin composition of the present disclosure and a base material resin. The total number of layers constituting the multilayer structure is typically 2 to 15, and preferably 3 to 10. In the above-described layer configuration, an adhesive resin layer containing an adhesive resin may be provided between the layers as necessary.

Also, with regard to the layer configuration of the multilayer structure, when a layer containing the resin composition of the present disclosure is represented by a (a1, a2, ...) and a gas barrier layer is represented by c (c1, c2, ...), any combinations, such as a/c, c/a/c, a/c/a, a1/a2/c, a/c1/c2, c2/c1/a/c1/c2, and c2/c1/a/c1/a/c1/c2, can be used. Furthermore, it is possible to add a recycled layer that is obtained by re-melting and re-molding edges, defective products, and the like generated in the process of producing the multilayer structure and that contains a mixture of the resin composition of the present disclosure and a gas-barrier-layer forming material. The total number of layers constituting the multilayer structure is typically 2 to 15, and preferably 3 to 10. In the above-described layer configuration, an adhesive resin layer containing an adhesive resin may be provided between the layers as necessary.

Furthermore, with regard to the layer configuration of the multilayer structure, when a layer containing the resin composition of the present disclosure is represented by a (a1, a2, ...), a base material resin layer is represented by b (b1, b2, ...), and a gas barrier layer is represented by c (c1, c2, ...), any combinations, such as c/a/b, b/a/c/b, c/a/b/a, c/a1/a2/b, a/c/b1/b2, b2/b1/a/c/b1/b2, and b2/b1/c/a/b1/a/c/b1/b2, can be used. Furthermore, it is possible to add a recycled layer that is obtained by re-melting and re-molding edges, defective products, and the like generated in the process of producing the multilayer structure and that contains a mixture of the resin composition of the present disclosure, a base material resin, and a gas-barrier-layer forming material. The total number of layers constituting the multilayer structure is typically 2 to 15, and preferably 3 to 10. In the above-described layer configuration, an adhesive resin layer containing an adhesive resin may be provided between the layers as necessary.

Known adhesive resins can be used as the above-described adhesive resin, and an appropriate adhesive resin can be selected according to the type of the thermoplastic resin used for the base material resin layer "b". A typical example thereof is a modified olefin polymer having a carboxy group that is obtained by chemically bonding an unsaturated carboxylic acid or an anhydride thereof to a polyolefin resin through an addition reaction, a grafting reaction, or the like. As this adhesive resin, the same resins as those describe above with respect to the adhesive resin (D) that can be used in the present disclosure can be used, and a description thereof will be omitted.

Note that the base material resin and the adhesive resin may each contain plasticizers, fillers, clays (montmorillonite etc.), colorants, antioxidants, antistatic agents, lubricants, nucleating agents, antiblocking agents, waxes, and the like to the extent that they do not interfere with the gist of the present disclosure (for example, in an amount of 30 wt% or less, and preferably 10 wt% or less, with respect to the entire resin).

Lamination of the resin composition of the present disclosure and the base material resin (including a case where an adhesive resin layer is provided therebetween) can be performed using a known method. Examples include a method in which the base material resin is melt extruded and laminated onto a film or the like made of the resin composition of the present disclosure, a method in which the resin composition of the present disclosure is melt extruded and laminated onto a base material resin layer, a method in which the resin composition and the base material resin are co-extruded, a method in which a resin composition layer and a base material resin layer are dry-laminated using a known adhesive such as an organotitanium compound, an isocyanate compound, a polyester compound, or a polyurethane compound, and a method in which a solution of the resin composition is applied onto the base material resin and then the solvent is removed. Of these methods, the method in which the resin composition and the base material resin are co-extruded is preferable in terms of cost and environment.

Note that, in the case where a mixed resin composition of the resin composition of the present disclosure and another resin composition and the base material resin are laminated as well, similar methods to those described above can be used.

The multilayer structure may be subjected to (heat) stretching as necessary. The stretching may be either uniaxial stretching or biaxial stretching, and in the case of biaxial stretching, simultaneous stretching or sequential stretching may be performed. Furthermore, as the stretching method, out of roll stretching, tenter stretching, tubular stretching, stretch blowing, vacuum/pressure forming, and the like, a method that realizes a high stretch ratio may also be used. The stretching temperature is a temperature close to the melting point of the multilayer structure, and is selected from the range of typically about 40°C to 170°C, and preferably about 60°C to 160°C. If the stretching temperature is too low, the stretchability tends to be poor. On the other hand, if the stretching temperature is too high, it tends to be difficult to maintain a stable stretched state.

Furthermore, after the stretching is complete, heat fixing may also be performed for the purpose of imparting dimensional stability to the stretched multilayer structure. Heat fixing can be performed using well-known means, and, for example, the stretched multilayer structure is heat-treated at typically 80°C to 180°C, and preferably 100°C to 165°C, typically for about 2 to 600 seconds while keeping the multilayer structure under tension. On the other hand, when a stretched film made of the multilayer structure that is obtained using the resin composition of the present disclosure is to be used as a shrink film, in order to impart heat shrinkability to the film, instead of heat fixing, treatment such as cold fixing can be performed by, for example, exposing the stretched film to cold air.

In some cases, a multilayer container in the form of a cup or a tray can also be obtained using the multilayer structure of the present disclosure. In such a case, draw forming is typically used, and specific examples thereof include vacuum forming, pressure forming, vacuum/pressure forming, and plug-assisted vacuum/pressure forming. Furthermore, when a multilayer container (laminate structure) in the form of a tube or a bottle is to be obtained from a multilayer parison (hollow tubular pre-molded product before blowing), blow molding is used. Specific examples thereof include extrusion blow molding (twin head type, mold transfer type, parison shift type, rotary type, accumulator type, horizontal parison type, etc.), cold parison type blow molding, injection blow molding, and biaxial stretch blow molding (extrusion cold parison biaxial stretch blow molding, injection cold parison biaxial stretch blow molding, injection molding in-line biaxial stretch blow molding, etc.). The resulting laminate can be heated, cooled, rolled, printed, dry-laminated, solution- or melt-coated, bagged, deep-drawn, boxed, tubed, split, or otherwise processed as necessary.

The thickness of the multilayer structure (including the stretched multilayer structure) as well as the thicknesses of the resin composition layer, the base material resin layer, and the adhesive resin layer constituting the multilayer structure depend on the layer configuration, the type of the base material resin, the type of the adhesive resin, the use and the packaging form, required physical properties, and the like and cannot be unconditionally defined, but the thickness of the multilayer structure (including the stretched multilayer structure) is typically 10 to 5000 um, preferably 30 to 3000 µm, and more preferably 50 to 2000 um. The thickness of the resin composition layer is typically 1 to 500 um, preferably 3 to 300 µm, and more preferably 5 to 200 um; the thickness of the base material resin layer is typically 5 to 3000 um, preferably 10 to 2000 um, and more preferably 20 to 1000 um; and the thickness of the adhesive resin layer is typically 0.5 to 250 µm, preferably 1 to 150 µm, and more preferably 3 to 100 µm.

Furthermore, the thickness ratio of the resin composition layer to the base material resin layer (resin composition layer/base material resin layer) in the multilayer structure (if a plurality of resin composition layers and a plurality of base material resin layers are present, the ratio between the thickest layers) is typically 1/99 to 50/50, preferably 5/95 to 45/55, and more preferably 10/90 to 40/60. On the other hand, the thickness ratio of the resin composition layer to the adhesive resin layer (resin composition layer / adhesive resin layer) in the multilayer structure (if a plurality of resin composition layers and a plurality of adhesive resin layers are present, the ratio between the thickest layers) is typically 10/90 to 99/1, preferably 20/80 to 95/5, and more preferably 50/50 to 90/10.

Since containers, such as cups, trays, tubes, and bottles, made of films or stretched films obtained from the above-described multilayer structure are formed using a bio-polyethylene resin, such containers have reduced environmental burden and meet social demands, compared with conventional containers that are formed using 1000 petroleum-derived polyethylene. Moreover, even though a bio-polyethylene resin is used, gel formation is suppressed in the resin composition layer, and the transparency is also excellent. Thus, such containers have excellent appearances and can be widely used as various types of packaging material containers for common food products, as well as seasonings such as mayonnaise and dressings, fermented foods such as miso, oil and fat foods such as salad oil, beverages, cosmetics, pharmaceuticals, and the like.

### Examples

Hereinafter, the present disclosure will be described in further detail using examples, but the present disclosure is not limited to the examples below and includes other matter that does not depart from the gist of the present disclosure. Note that "parts" and "%" in the following description mean "parts by weight" and "wt%", respectively, unless otherwise specified.

Prior to the examples, the following components were prepared.

### Bio-Polyethylene Resin (A)

A-1: Plant-derived linear low-density polyethylene [SLH118 (Green PE manufactured by Braskem), MFR: 1.0 g/10 min (at 190°C and a load of 2160 g)]
A-2: Plant-derived linear low-density polyethylene [SEB853 (Green PE manufactured by Braskem), MFR: 2.7 g/10 min (at 190°C and a load of 2160 g)]

### Petroleum-Polyethylene Resin (A')

A': Low-density polyethylene [LF448K1 (NOVATEC LD manufactured by Japan Polyethylene Corporation), MFR: 2.0 g/10 min (at 190°C and a load of 2160 g)]

### EVOH (B)

B-1: Ethylene-vinyl alcohol copolymer [ethylene content: 29 mol%, degree of saponification: 99.7 mol%, MFR: 8 g/10 min (at 210°C and a load of 2160 g)]
B-2: Ethylene-vinyl alcohol copolymer [ethylene content: 29 mol%, degree of saponification: 99.7 mol%, MFR: 8 g/10 min (at 210°C and a load of 2160 g)]
B-3: Ethylene-vinyl alcohol copolymer [ethylene content: 44 mol%, degree of saponification: 99.6 mol%, MFR: 12 g/10 min (at 210°C and a load of 2160 g)]
B-4: Ethylene-vinyl alcohol copolymer [ethylene content: 44 mol%, degree of saponification: 98.5 mol%, MFR: 4 g/10 min (at 210°C and a load of 2160 g)]
B-5: Ethylene-vinyl alcohol copolymer [ethylene content: 44 mol%, degree of saponification: 99.6 mol%, MFR: 13 g/10 min (at 210°C and a load of 2160 g)]

### Alkali Metal Salt (C)

- Sodium acetate (Na-acetate)
- Potassium acetate (K-acetate)

### Other Metal Salts (C')

- Calcium stearate (StCa)
- Magnesium stearate (StMg)
- Zinc stearate (StZn)
- Calcium acetate (Ca-acetate)

### Adhesive Resin (D)

- Maleic anhydride-modified polymer: Maleic anhydride-modified polyethylene [Modic M533 manufactured by Mitsubishi Chemical Corporation, MFR: 2.5 g/10 min (at 190°C and a load of 2160 g)]

### Description of Evaluation Items (Evaluation Methods and Evaluation Criteria)

Next, details of the evaluation items for samples of the examples, comparative examples, and reference examples will be described below.

### (1) Gel Amount

First, 30 um thick single-layer films were obtained by performing film formation under the following film formation conditions using pellets made of the resin compositions used in the examples, comparative examples, and reference examples.

### <Film Formation Conditions>

Extruder: Diameter (H) 40 mm, L / H = 28
Screw: Full flight type, Compression ratio = 2.5

Then, the gel amount in the single-layer films was measured visually. Specifically, the lower surface of each single-layer film was irradiated with light, and the number of gels per unit area (4 cm × 4 cm) was counted, where a portion (diameter: 0.4 mm or more) that did not transmit light was counted as one gel. The number of gels was evaluated according to the following criteria.
(poor): The number of gels was 40 or more, or the film was not formed.
(good) : The number of gels was 15 or more and less than 40.
(very good): The number of gels was 4 or more and less than 15.
(excellent): The number of gels was 3 or less, or gels were not observed.

### (2) Transparency (Internal Haze)

First, 30 um thick single-layer films were produced in the same manner as described above using pellets made of the resin compositions used in the examples, comparative examples, and reference examples. The single-layer films were then subjected to transparency testing using a haze meter (NDH2000 manufactured by Nippon Denshoku Industries Co., Ltd.) as defined in JIS K7105, and thus the total haze (%) was measured. The total haze is obtained by dividing the diffuse light transmittance of a test piece by the total light transmittance and is expressed as a percentage. The lower the value of the total haze, the better the film transparency. Note that, in order to evaluate the haze inside each film, the internal haze (%) was measured in a state in which the effect of unevenness on the film surface was removed by using a sample obtained by applying liquid paraffin to both sides of the film at the time of measurement. Based on the measured value, the internal haze was evaluated according to the following criteria.
(poor): 20% or more
(good): 15% or more and less than 20%
(very good): 10% or more and less than 15%
(excellent): less than 10%

### Examples 1 to 9, Comparative Examples 1 to 8, Reference Examples 1 to 3

Components were mixed so as to satisfy a corresponding composition shown in any one of Tables 1 to 3 below, and the mixture was introduced into a cylinder of a twin-screw kneading extruder (TEX32 manufactured by The Japan Steel Works, Ltd.) through a material feed port thereof, conveyed to a kneading zone set to a temperature of 240°C, and melt blended. Then, the resulting melt-blended product was extruded into strands from a die attached to a discharge port. A strand-like extrudate obtained in this manner was pelletized using a resin pelletizer to obtain a pellet-like resin composition.

The thus obtained samples of Examples 1 to 9, Comparative Examples 1 to 8, and Reference Examples 1 to 3 were subjected to measurement and evaluation of the above-described evaluation items (gel amount and transparency (internal haze)). Tables 1 to 3 below also show the results.

**Table 1**

| | Composition | | | | Evaluation | |
|---|---|---|---|---|---|---|
| | Polyethylene resin (A), (A') (wt%) [Type] | EVOH(B) (parts by weight) [Type] | Alkali metal salt (C), (C') (Content with respect to B in terms of metal, ppm) [Type] | Adhesive resin (D) (parts by weight) | Gel amount | Internal haze (%) |
| Ex. 1 | 100 [A-1: Bio] | 0.1 [B-1] | 100 [C: Na-acetate] | 0.1 | excellent | excellent |
| Ex. 2 | 100 [A-1: Bio] | 1 [B-1] | 100 [C: Na-acetate] | 1 | very good | excellent |
| Ex. 3 | 100 [A-1: Bio] | 5.3 [B-1] | 100 [C: Na-acetate] | 5.3 | good | excellent |
| Ex. 4 | 100 [A-1: Bio] | 12.5 [B-1] | 100 [C: Na-acetate] | 12.5 | very good | good |
| Ex. 5 | 100 [A-1: Bio] | 12.5 [B-3] | 100 [C: Na-acetate] | 12.5 | very good | excellent |
| Ex. 6 | 100 [A-1: Bio] | 12.5 [B-2] | 300 [C: Na-acetate] | 12.5 | excellent | good |
| Ex. 7 | 100 [A-1: Bio] | 12.5 [B-2] | 1500 [C: Na-acetate] | 12.5 | very good | good |
| Ex. 8 | 100 [A-1: Bio] | 12.5 [B-4] | 100 [C: Na-acetate] | 12.5 | very good | excellent |

**Table 2**

| | Composition | | | | Evaluation | |
|---|---|---|---|---|---|---|
| | Polyethylene resin (A), (A') (wt%) [Type] | EVOH(B) (parts by weight) [Type] | Alkali metal salt (C), (C') (Content with respect to B in terms of metal, ppm) [Type] | Adhesive resin (D) (parts by weight) | Gel amount | Internal haze (%) |
| Ex. 9 | 100 [A-1: Bio] | 12.5 [B-2] | 100 [C: K-acetate] | 12.5 | very good | good |
| Com. Ex. 1 | 100 [A-1: Bio] | 12.5 [B-2] | -- | 12.5 | poor | poor |
| Com. Ex. 2 | 100 [A-1: Bio] | 12.5 [B-5] | -- | 12.5 | poor | good |
| Com. Ex. 3 | 100 [A-1: Bio] | 12.5 [B-2] | 2000 [C: Na-acetate] | 12.5 | good | good |
| Com. Ex. 4 | 100 [A-1: Bio] | 12.5 [B-2] | 100 [C': StCa] | 12.5 | poor | poor |
| Com. Ex. 5 | 100 [A-1: Bio] | 12.5 [B-2] | 100 [C': StMg] | 12.5 | poor | good |
| Com. Ex. 6 | 100 [A-1: Bio] | 12.5 [B-2] | 100 [C': StZn] | 12.5 | poor | poor |

**Table 3**

| | Composition | | | | Evaluation | |
|---|---|---|---|---|---|---|
| | Polyethylene resin (A), (A') (wt%) [Type] | EVOH(B) (parts by weight) [Type] | Alkali metal salt (C), (C') (Content with respect to B in terms of metal, ppm) [Type] | Adhesive resin (D) (parts by weight) | Gel amount | Internal haze (%) |
| Com. Ex. 7 | 100 [A-1: Bio] | 12.5 [B-2] | 100 [C': Ca-acetate] | 12.5 | poor | excellent |
| Com. Ex. 8 | 100 [A-2: Bio] | 12.5 [B-2] | 100 [C': Ca-acetate] | 12.5 | poor | excellent |
| Ref. Ex. 1 | 100 [A': Petroleum] | 12.5 [B-2] | - | 12.5 | very good | excellent |
| Ref. Ex. 2 | 100 [A': Petroleum] | 12.5 [B-1] | 100 [C: Na-acetate] | 12.5 | very good | excellent |
| Ref. Ex. 3 | 100 [A': Petroleum] | 12.5 [B-2] | 100 [C': Ca-acetate] | 12.5 | very good | excellent |

It can be seen from the results shown above that all of the samples of Examples 1 to 9 were generally favorably evaluated in both of the two evaluation items, indicating that these samples had excellent appearances.

On the other hand, all of the samples of Comparative Examples 1 to 8 were evaluated lower than the samples of the examples in at least one of the two evaluation items, indicating that there were problems in appearance with these samples.

Furthermore, it can be seen from the results of the samples of Reference Examples 1 to 3 that, in the cases where petroleum-derived polyethylene was used, regardless of whether an alkali metal salt was added or not, the samples were evaluated as equivalent to the samples of the examples in the two evaluation items, indicating that whether an alkali metal salt is added or not does not affect the evaluation of the two evaluation items.

These results indicate that the appearance problems of the samples of Comparative Examples 1 to 8 are peculiar to the cases where a bio-polyethylene resin was used, and these problems can be solved by adding an alkali metal salt.

While specific modes of the present disclosure are described in the examples above, the examples above are for illustrative purpose only and should not be construed as restrictive. Various alterations that are apparent to those skilled in the art are all intended to be within the scope of the present disclosure.

The present disclosure provides a resin composition containing a bio-polyethylene resin (A), an EVOH (B), and an alkali metal salt (C), and while containing the bio-polyethylene resin (A), the resin composition suppresses gel formation and a reduction in transparency during molding and can be widely used as a resin composition with which a molded product having an excellent appearance can be obtained.

## Claims

1. A resin composition comprising:
a bio-polyethylene resin (A);
an ethylene-vinyl alcohol copolymer (B); and
an alkali metal salt (C),
wherein the content of the alkali metal salt (C) is 10 ppm to 1500 ppm, in terms of metal, with respect to the weight of the ethylene-vinyl alcohol copolymer (B).

2. The resin composition according to claim 1,
wherein a content ratio (A/B) by weight of the bio-polyethylene resin (A) to the ethylene-vinyl alcohol copolymer (B) is 100/0.01 to 100/25.

3. The resin composition according to claim 1 or 2,
wherein the ethylene content in the ethylene-vinyl alcohol copolymer (B) is 20 mol% to 60 mol%.

4. The resin composition according to any one of claims 1 to 3, further comprising an adhesive resin (D).

5. The resin composition according to claim 4,
wherein the adhesive resin (D) is a maleic acid-modified polymer.

6. The resin composition according to any one of claims 1 to 5,
wherein the alkali metal salt (C) is an acetic acid salt of an alkali metal.

7. The resin composition according to any one of claims 1 to 5,
wherein the alkali metal salt (C) is sodium acetate.

8. A film made of the resin composition according to any one of claims 1 to 7.

9. A multilayer structure comprising:
a gas barrier layer;
a base material resin layer; and
an intermediate layer provided between the gas barrier layer and the base material resin layer,
wherein the intermediate layer is a layer containing the resin composition according to any one of claims 1 to 7.

## Patentansprüche

1. Harzzusammensetzung, umfassend:
ein Bio-Polyethylenharz (A),
ein Ethylen-Vinylalkohol-Copolymer (B) und
ein Alkalimetallsalz (C),
wobei der Gehalt des Alkalimetallsalzes (C) 10 ppm bis 1.500 ppm in Form des Metalls in Bezug auf das Gewicht des Ethylen-Vinylalkohol-Copolymers (B) beträgt.

2. Harzzusammensetzung gemäß Anspruch 1,
wobei ein Gewichtsgehaltsverhältnis (A/B) von Bio-Polyethylenharzes (A) zu Ethylen-Vinylalkohol-Copolymer (B) 100/0,01 bis 100/25 beträgt.

3. Harzzusammensetzung gemäß Anspruch 1 oder 2,
wobei der Ethylengehalt in dem Ethylen-Vinylalkohol-Copolymer (B) 20 mol-% bis 60 mol-% beträgt.

4. Harzzusammensetzung gemäß einem der Ansprüche 1 bis 3, ferner umfassend ein Klebeharz (D).

5. Harzzusammensetzung gemäß Anspruch 4,
wobei das Klebeharz (D) ein maleinsäuremodifiziertes Polymer ist.

6. Harzzusammensetzung gemäß einem der Ansprüche 1 bis 5,
wobei das Alkalimetallsalz (C) ein Essigsäuresalz eines Alkalimetalls ist.

7. Harzzusammensetzung gemäß einem der Ansprüche 1 bis 5,
wobei das Alkalimetallsalz (C) Natriumacetat ist.

8. Folie, hergestellt aus der Harzzusammensetzung gemäß einem der Ansprüche 1 bis 7.

9. Mehrschichtstruktur, umfassend:
eine Gasbarriereschicht,
eine Basismaterialharzschicht und
eine Zwischenschicht, die sich zwischen der Gasbarriereschicht und der Basismaterialschicht befindet,
wobei die Zwischenschicht eine Schicht ist, die die Harzzusammensetzung gemäß einem der Ansprüche 1 bis 7 enthält.

## Revendications

1. Composition de résine comprenant :
une résine (A) de biopolyéthylène ;
un copolymère (B) éthylène-alcool vinylique ; et
un sel (C) de métal alcalin,
dans laquelle, la teneur en sel (C) de métal alcalin est de 10 ppm à 1500 ppm, en ce qui concerne le métal, par rapport au poids du copolymère (B) éthylène-alcool vinylique.

2. Composition de résine selon la revendication 1,
dans laquelle le rapport de teneur (A/B) en poids entre la résine (A) de biopolyéthylène et le copolymère (B) éthylène-alcool vinylique est de 100/0,01 à 100/25.

3. Composition de résine selon la revendication 1 ou la revendication 2,
dans laquelle le teneur en éthylène, dans le copolymère (B) éthylène-alcool vinylique est de 20 % en moles à 60 % en moles.

4. Composition de résine selon l'une quelconque des revendications 1 à 3, comprenant en outre une résine (D) adhésive.

5. Composition de résine selon la revendication 4,
dans laquelle la résine (D) adhésive est un polymère modifié par un acide maléique.

6. Composition de résine selon l'une quelconque des revendications 1 à 5,
dans laquelle le sel (C) de métal alcalin est un sel d'acide acétique d'un métal alcalin.

7. Composition de résine selon l'une quelconque des revendications 1 à 5,
dans laquelle le sel (C) de métal alcalin est de l'acétate de sodium.

8. Film constitué de la composition de résine selon l'une quelconque des revendications 1 à 7.

9. Structure multicouche comprenant :
une couche barrière aux gaz ;
une couche de résine en matériau de base ; et
une couche intermédiaire fournie entre la couche barrière aux gaz et la couche de résine en matériau de base,
dans laquelle la couche intermédiaire est une couche contenant la composition de résine selon l'une quelconque des revendications 1 à 7.
